# FASCICULE DE BREVET EUROPEEN

(11) **EP 2 930 803 B1**
(45) Date de publication et mention de la délivrance du brevet: **02.11.2016**
(21) Numéro de dépôt: 15163095.1
(22) Date de dépôt: 10.04.2015
(51) Int. Cl.: H02B 1/21

(54) **ENSEMBLE DE POSITIONNEMENT DE TIROIRS POUR UN TABLEAU ELECTRIQUE, TABLEAU ELECTRIQUE COMPRENANT UN TEL ENSEMBLE ET PROCEDE DE MONTAGE DE CET ENSEMBLE**
EINHEIT ZUM POSITIONIEREN DER EINSCHÜBE FÜR EINE SCHALTANLAGE, EINE SOLCHE EINHEIT UMFASSENDE SCHALTANLAGE UND MONTAGEVERFAHREN DIESER EINHEIT
DRAWER POSITIONING ASSEMBLY FOR AN ELECTRIC PANEL, ELECTRIC PANEL COMPRISING ONE SUCH ASSEMBLY AND METHOD FOR FITTING THIS ASSEMBLY

(30) Priorité: 11.04.2014 FR 1453275
(43) Date de publication de la demande: 14.10.2015
(73) Titulaire: Schneider Electric Industries SAS, 92500 Rueil-Malmaison (FR)
(72) Inventeur: Pellicano, Joseph, 73230 St Alban Leysse (FR); Carle, Pierre, 73250 Saint Pierre d'Albigny (FR); Blochouse, Philippe, 73290 La Motte Servolex (FR)
(74) Mandataire: Lavoix

(56) Documents cités:
- DE-A1- 4 015 040

## Description

L'invention concerne un ensemble de positionnement, ou d'embrochement de tiroirs pour un tableau électrique, un tableau électrique comprenant un tel ensemble et un procédé de montage de cet ensemble.

L'invention s'applique aux tableaux électriques à basse tension, qui sont pourvus de tiroirs débrochables.

De manière connue et comme décrit dans EP-A-1 043 820, un tableau électrique basse tension comprend une armoire, à l'intérieur de laquelle est disposé, généralement en partie haute, un jeu de barres horizontal d'alimentation en courant électrique. Ce jeu de barres horizontal est connecté avec un jeu de barres vertical de distribution du courant électrique à différents appareils électriques. Les appareils électriques sont sélectivement connectés au tableau électrique au moyen de tiroirs débrochables, qui jouent le rôle de sectionneur. On parle d'un tableau à tiroirs débrochables. Le jeu de barres vertical comprend plusieurs barres disposées dans un même plan vertical.

Les tableaux électriques à tiroirs débrochables sont particulièrement adaptés aux installations électriques comprenant de nombreux appareils électriques. Chaque tiroir comprend tous les organes électriques nécessaires au fonctionnement d'un appareil, comme par exemple un disjoncteur, un contacteur ou un relais thermique. Chaque tiroir comporte, en outre, des moyens de connexion aux barres du jeu de barres vertical, tels que des pinces, et un bornier de sortie sur lesquels sont connectés des câbles d'alimentation de l'appareil électrique associé au tiroir.

L'utilisation des tiroirs débrochables permet, en cas de panne, de remplacer facilement un tiroir défectueux.

Les tiroirs sont chacun positionnés, ou embrochés, sur un ensemble de positionnement prévu à cet effet, qui est logé dans l'armoire du tableau électrique. Cet ensemble de positionnement comprend plusieurs modules, chaque module offrant la possibilité d'embrocher un tiroir. Généralement, les modules sont disposés les uns au-dessus des autres, et assurent une fonction mécanique d'embrochement des tiroirs, une isolation électrique du jeu de barres vertical par rapport à l'extérieur et une isolation électrique des barres du jeu de barres vertical entre elles. Or, entre deux modules d'embrochement d'un tiroir, les barres du jeu de barres vertical sont directement en regard les unes des autres du fait de l'espace vide entre deux modules de positionnement successifs. Certaines normes demandent de réduire le risque de court-circuit en augmentant la distance d'isolement et le vis-à-vis direct entre éléments conducteurs.

DE-A-40 15 040 s'attaque à ce problème. Il divulgue un tableau électrique comprenant des modules de positionnement de tiroirs, qui sont empilés les uns au-dessus des autres. Chaque module de positionnement comprend un boitier formé par deux cloisons superposées et quatre flancs de séparation des barres du jeu de barres vertical. Les flancs se prolongent de part et d'autres des cloisons superposées et forment des lignes en relief en partie supérieure et inférieure du boitier. Ces lignes en relief augmentent la longueur du chemin de rampage électrique entre deux barres adjacentes à l'interface entre deux modules successifs. Cependant, les lignes en relief n'augmentent pas suffisamment la longueur du chemin de rampage électrique entre deux barres adjacentes. Ainsi, les modules de positionnement ne sont pas adaptés au cas où les barres du jeu de barres vertical sont plus resserrées les unes des autres car un court-circuit pourrait se produire.

C'est à ces inconvénients qu'entend plus particulièrement remédier l'invention en proposant un ensemble de positionnement de tiroirs pour un tableau électrique dans lequel la longueur du chemin de rampage électrique entre les barres du jeu de barres vertical, à l'interface entre deux modules successifs, est plus importante.

A cet effet l'invention concerne un ensemble de positionnement de tiroirs pour un tableau électrique comprenant un jeu de barres vertical de distribution du courant électrique à des appareils électriques, ce jeu de barres comprenant plusieurs barres, qui sont disposées dans un même plan vertical et sur lesquelles il est prévu de connecter des tiroirs du tableau électrique, et plusieurs modules de positionnement des tiroirs, qui sont disposés les uns au dessus des autres et qui entourent les barres du jeu de barres vertical. Les modules de positionnement comprennent des moyens d'augmentation de la distance d'isolement entre les barres à l'interface entre deux modules successifs, cette distance d'isolement correspondant à la longueur du chemin de rampage électrique entre les barres. Conformément à l'invention, les moyens d'augmentation comprennent des flancs de séparation des barres du jeu de barres vertical, entre lesquels s'étendent des nervures d'isolation, certaines au moins des nervures d'isolation délimitent un logement de réception d'un côté d'une barre du jeu de barres vertical. En outre, les nervures ne sont pas rectilignes.

Grâce à l'invention, le chemin de rampage, ou de fuite à parcourir pour le courant afin de passer d'une barre à l'autre, qui est un chemin « forcé » pour le courant, a une longueur plus importante que pour un module de positionnement standard. L'isolation électrique entre les barres du jeu de barres vertical est ainsi renforcée sans augmenter l'écartement des barres entre elles.

Selon des aspects avantageux mais non obligatoires de l'invention, un ensemble de positionnement de tiroirs pour un tableau électrique peut comporter une ou plusieurs des caractéristiques suivantes, prises dans toute combinaison techniquement admissible :
- Les nervures d'isolation ont une forme en ligne brisée.
- La distance d'isolement est égale à 25,4 mm.
- Chaque module de positionnement comporte une première partie, dans laquelle sont ménagées des ouvertures de passage pour des moyens de connexion électrique d'un tiroir aux barres du jeu de barres vertical, une deuxième partie, disposée à l'arrière de la première partie, et un obturateur, qui est mobile par rapport à la première partie entre une configuration fermée dans laquelle les ouvertures sont obturées et une configuration ouverte dans laquelle les ouvertures sont découvertes.
- L'obturateur est une grille, qui est mobile horizontalement par rapport à la première partie, selon une direction parallèle au plan vertical de positionnement des barres du jeu de barres vertical et qui est positionnée en premier plan du module, alors que la grille comporte plusieurs ouvertures et plusieurs barreaux, parmi lesquels un barreau d'extrémité est adapté pour être accroché à la première partie lorsque l'obturateur est en configuration fermée.
- Le barreau d'extrémité est décrochable de la première partie par application d'un effort transversal dirigé globalement perpendiculairement au plan vertical dans lequel sont placées les barres du jeu de barres vertical, alors que le barreau d'extrémité comporte une surface de contact inclinée par rapport à ce plan, et que l'effort appliqué pour décrocher le barreau entraine aussi un déplacement longitudinal de la grille par rapport à la première partie.
- Chaque module comprend un moyen de rappel de l'obturateur en configuration fermée.
- Le moyen de rappel comprend un ressort plat attaché à la première partie, qui exerce un effort de charge élastique de rappel de l'obturateur vers sa configuration fermée.

L'invention concerne également un tableau électrique, comprenant une armoire, dans laquelle est disposé un jeu de barres horizontal d'alimentation prévu pour être connecté à un jeu de barres vertical de distribution. Conformément à l'invention, le tableau comprend un ensemble de positionnement de tiroirs tel que décrit ci-dessus.

L'invention concerne enfin un procédé de montage d'un ensemble de positionnement de tiroirs tel que décrit précédemment. Ce procédé comprend des étapes successives consistant à :
a) poser à plat une enveloppe métallique à section transversale en U, avec les deux parois latérales de l'enveloppe dirigées verticalement et la surface extérieure du fond de l'enveloppe en contact avec une surface plane,
b) fixer la deuxième partie d'un premier module à l'intérieur de l'enveloppe, au niveau d'une première extrémité de l'enveloppe,
c) assembler les deuxièmes parties des autres modules l'une après l'autre en allant de la première extrémité à une deuxième extrémité, la première et la deuxième extrémité étant respectivement des extrémités basse et haute de l'enveloppe en configuration assemblée de l'ensemble dans le tableau électrique,
d) positionner des barres du jeu de barres vertical dans des logements des deuxièmes parties des modules,
e) fixer la première partie du premier module au dessus des barres, et
f) assembler la première partie des autres modules l'une après l'autre en allant de la première extrémité à la deuxième extrémité.

L'invention et d'autres avantages de celle-ci apparaîtront plus clairement à la lumière de la description qui va suivre d'un mode de réalisation d'un ensemble de positionnement de tiroirs pour un tableau électrique conforme à son principe et faite en référence aux dessins dans lesquels :
- la figure 1 est une vue en perspective d'un tableau électrique comprenant un ensemble de positionnement de tiroirs conforme à l'invention,
- la figure 2 est une vue à plus grande échelle de l'ensemble de positionnement de la figure 1, qui est représenté partiellement dans le sens de la hauteur,
- la figure 3 est une vue en perspective et à plus grande échelle d'un module de positionnement d'un tiroir appartenant à l'ensemble de positionnement de la figure 2,
- la figure 4 est une vue, de dessous et en perspective, d'un assemblage de trois modules de positionnement selon la figure 3,
- la figure 5 est une vue analogue à la figure 4, prise sous un autre angle,
- la figure 6 est une vue en perspective d'une partie arrière du module de positionnement de la figure 3,
- la figure 7 est une vue en perspective d'une partie avant du module de positionnement de la figure 3,
- la figure 8 est une vue en perspective éclatée, illustrant la partie avant de la figure 7, un ressort plat et un obturateur,
- la figure 9 est une vue à plus grande échelle de l'encerclé IX de la figure 8,
- la figure 10 est une coupe horizontale selon le plan X à la figure 7 de la partie avant d'un module de positionnement, sur laquelle sont montés l'obturateur et le ressort plat,
- la figure 11 est une vue à plus grande échelle de l'encerclé XI de la figure 10, et
- la figure 12 est une vue partielle d'un module selon la flèche XII à la figure 3, dans laquelle un flanc d'un module identique disposé au dessus est emboité.

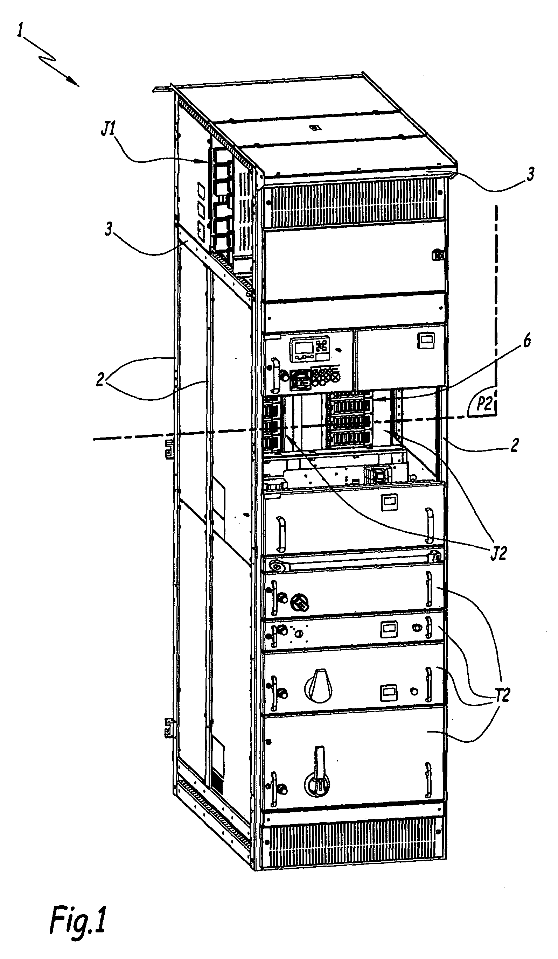

Sur la figure 1 est représenté un tableau électrique, ou cellule électrique 1. Ce tableau électrique 1 est un tableau basse tension, avec une plage de fonctionnement pouvant varier de 400A à 2000A.

Le tableau électrique 1 est une armoire, dont l'ossature est formée par des montants 2 et des traverses 3, qui définissent une cage globalement parallélépipédique. Les montants 2 et les traverses 3 du tableau 1 sont des barres métalliques.

Dans ce document, les directions « horizontale » et « verticale» sont interprétées par rapport à la configuration de la figure 1.

Un jeu de barres horizontal J1 est installé en partie supérieure du tableau électrique 1. Ce jeu de barres J1 est un jeu de barres d'alimentation en courant électrique et comporte une ou plusieurs barres conductrices pour chaque phase de l'alimentation et pour le neutre. Dans l'exemple d'un réseau triphasé, ce jeu de barres horizontal comporte quatre barres à section rectangulaire, parmi lesquelles trois barres véhiculent les phases du réseau et une barre est connectée au neutre du réseau. Les barres du jeu de barres J1 s'étendent parallèlement au sol en configuration installée à l'intérieur du tableau électrique 1.

Le jeu de barres horizontal J1 est électriquement connecté à deux jeux de barres verticaux J2, qui s'étendent dans le sens de la hauteur du tableau électrique 1. En pratique, plusieurs pièces de liaison permettent de connecter électriquement les barres du jeu de barres J1 avec les barres des jeux de barres J2.

Les jeux de barres J2 comportent chacun quatre barres conductrices B à section rectangulaire, qui s'étendent dans un même plan vertical P2. Le plan P2 est parallèle à la direction longitudinale des barres du jeu de barres horizontal J1.

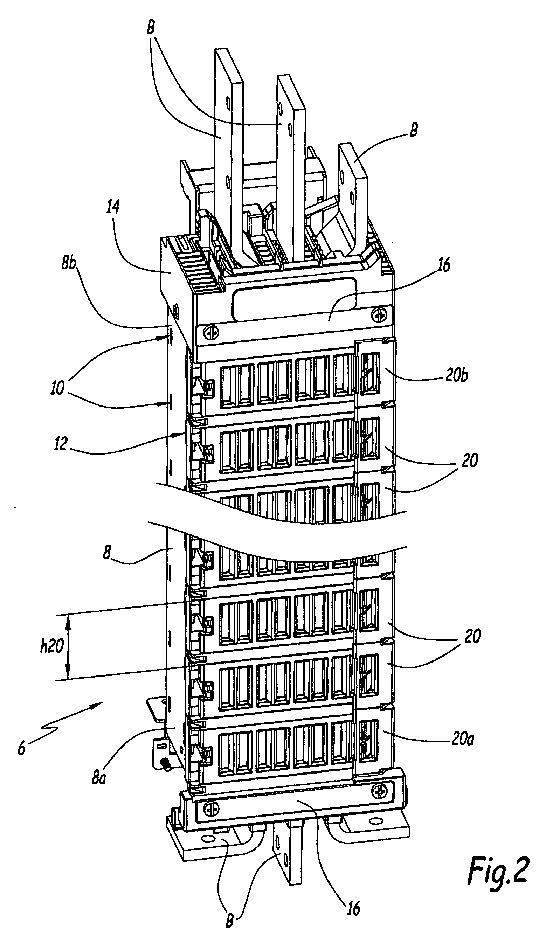

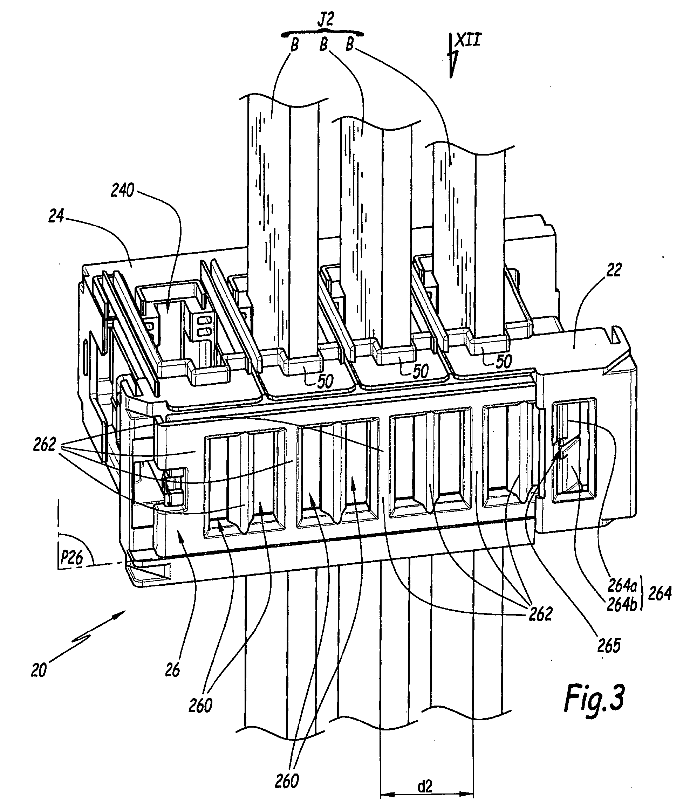

Les barres B de chaque jeu de barres vertical J2 sont logées à l'intérieur d'une colonne 6 qui protège le jeu de barres de l'extérieur, notamment des poussières et autres particules. Cette colonne 6 maintient aussi les barres en position et isole électriquement les barres du jeu de barres J2 entre elles. Sur les figures 3 à 5, seules trois barres B sur quatre sont représentées pour la clarté du dessin. En pratique, la quatrième barre B, qui n'est pas représentée, est reçue dans la colonne 6 dans un logement vertical visible sur la gauche des barres B aux figures 2 et 3 et qui s'étend sur toute la hauteur de la colonne 6.

d2 désigne l'écartement des barres B, c'est-à-dire la distance entre deux barres successives. Dans l'exemple, d2 est environ égale à 18 mm.

Le tableau électrique 1 est dit à tiroirs débrochables, c'est-à-dire qu'il comprend plusieurs tiroirs T2 qui peuvent être sélectivement connectés aux jeux de barres de distribution J2 par embrochement.

Dans la suite de la description, seule une colonne 6 protégeant un jeu de barres vertical J2 est décrite, dans la mesure où l'autre colonne est identique. Cette colonne constitue un ensemble 6 de positionnement de tiroirs T2, qui sont prévus pour être connectés au jeu de barres vertical J2 contenu dans l'ensemble 6. Ces tiroirs T2 peuvent être alternativement embrochés ou débrochés sur l'ensemble 6. Les tiroirs T2 peuvent être chacun considérés comme des interrupteurs disposés entre la source d'alimentation, ici le jeu de barres J2, et un appareil électrique, comme un moteur électrique. La fermeture de cet interrupteur s'effectue simplement en embrochant le tiroir sur l'ensemble 6, avec éventuellement une sécurité supplémentaire.

Les tiroirs T2 sont de différentes hauteurs, avec notamment une hauteur multiple de 50 mm. On parle d'un pas de positionnement des tiroirs. Ainsi, le tableau électrique 1 peut comporter des tiroirs de 100 mm, de 150 mm ou encore de 200 mm et ce jusqu'à 600mm par pas de 50mm. En pratique, la hauteur d'un tiroir est choisie en fonction de la puissance ou du type d'appareil électrique à brancher.

En comparaison avec les tableaux électriques actuels où le pas est de 100 mm, le tableau électrique 1 selon l'invention permet de brancher plus de tiroirs si les conditions le permettent, et donc, de connecter plus d'appareils électriques à un même tableau. Autrement formulé, la densité de tiroirs au sein du tableau électrique 1 selon l'invention est plus importante que la densité de tiroirs dans un tableau électrique de l'art antérieur.

Chaque tiroir comporte des moyens de connexion électrique aux barres du jeu de barres J2 et un bornier de sortie, sur lequel il est possible de brancher l'appareil électrique. En pratique, les moyens de connexion électrique des tiroirs aux barres d'un jeu de barres vertical sont formés par des pinces à deux doigts, qui sont prévues pour pincer les barres B. Ainsi, chaque tiroir peut comporter trois ou quatre pinces de connexion aux barres B suivant que le jeu de barre soit tripolaire-ou tetrapolaire, ces pinces n'étant pas visibles sur les figures.

Dans la suite de la description, les termes « supérieur », « inférieur », « dessus » et «dessous » doivent être interprétés par rapport à une configuration installée de l'ensemble de positionnement 6 dans le tableau électrique 1, comme illustré à la figure 1.

L'ensemble de positionnement 6 comporte plusieurs modules 20, qui sont empilés les uns au dessus des autres dans le sens de la hauteur. Autrement dit, les modules 20 sont en appui l'un sur l'autre. Les modules 20 sont chacun réalisés en matériau électriquement isolant, de préférence en matière plastique.

Les modules 20 présentent chacun une hauteur h20 de 50 mm, si bien qu'il est possible d'embrocher un tiroir sur le tableau électrique 1 tous les 50 mm. Par exemple, un tiroir de 150 mm occupe trois modules de positionnement 20.

Les modules 20 de l'ensemble 6 sont contenus dans une enveloppe 8 en tôle ayant une section horizontale en forme de U à fond plat, avec le fond du U dirigé vers le fond de l'armoire. Ici, le fond de l'armoire représente la paroi verticale du tableau électrique 1 opposée aux tiroirs T2. Ainsi, les tiroirs T2 se ferment en direction du fond de l'armoire. 8a et 8b désignent respectivement les extrémités basse et haute de l'enveloppe 8. Les modules 20 de positionnement des tiroirs T2 sont disposés les uns aux dessus des autres entre un bouchon inférieur qui n'est pas représenté à la figure 2 et un bouchon supérieur. 20a et 20b désignent respectivement un module bas et un module haut, c'est-à-dire des modules qui sont disposés au plus bas et au plus haut de l'ensemble 6 en configuration installée dans le tableau électrique 1. Les modules 20a et 20b sont respectivement disposés au dessus et en dessous des bouchons inférieur et supérieur. Les bouchons de l'ensemble 6 sont également réalisés dans un matériau électriquement isolant, de préférence en matière plastique.

Par ailleurs, les modules de positionnement 20 sont chacun fixés à l'enveloppe métallique 8 par l'intermédiaire de moyens d'accrochage. Ces moyens d'accrochage comprennent des encoches 10 et 12 ménagées dans l'enveloppe 8 et des ailettes latérales portées par les modules 20, qui sont prévues pour être engagées dans les encoches 10 et 12.

De plus, deux ceintures de rigidification 16, disposées en partie haute et basse de l'ensemble 6, permettent de renforcer la tenue mécanique de l'ensemble de positionnement 6.

Dans la suite de la description, seul un module de positionnement 20 est décrit, les autres étant identiques. De plus, la direction « avant » est la direction orientée vers l'opérateur lorsqu'il accède à l'armoire électrique, alors que la direction « arrière » est la direction orientée vers le fond de l'armoire, qui est la paroi opposée à l'opérateur lorsqu'il accède à l'armoire par l'avant. De même, une direction « longitudinale » est une direction horizontale parallèle au plan P2 et une direction « transversale » est une direction sensiblement perpendiculaire au plan P2.

Comme visible à la figure 3, le module de positionnement 20 comprend une partie avant 22, une partie arrière 24 et un obturateur 26.

L'obturateur 26 est placé en premier plan à l'avant du module de positionnement 20, c'est-à-dire qu'il est monté sur l'avant de la partie avant 22. Le fait de placer l'obturateur 26 en premier plan à l'avant permet un remplacement facile et rapide de celui-ci, en cas de besoin. Les parties avant 22 et arrière 24 sont disposées de part et d'autre des barres B du jeu de barres vertical J2, de chaque côté du plan P2.

L'obturateur 26 est mobile longitudinalement entre une configuration fermée, ou verrouillée, dans laquelle l'accès aux barres B du jeu de barres vertical J2 est bloqué et une configuration ouverte, ou déverrouillée, dans laquelle les barres B du jeu de barres vertical 52 sont accessibles pour une connexion électrique avec les pinces d'un tiroir. En pratique, l'obturateur est verrouillé lorsqu'il n'y a pas de tiroir embroché sur le module 20 et passe en configuration déverrouillée lorsqu'un tiroir est embroché sur le module 20. Sur la figure 3, l'obturateur 26 se trouve en configuration verrouillée.

L'obturateur 26 est une grille qui s'étend longitudinalement dans un plan P26 parallèle au plan P2. Cet obturateur 26 comporte plusieurs ouvertures 260 qui sont séparées entre elles par des barreaux 262. Les ouvertures 260 et les barreaux 262 sont globalement de même largeur, cette largeur étant mesurée longitudinalement. Plus précisément, l'obturateur 26 comporte huit ouvertures 260, séparées par sept barreaux 262. Les huit ouvertures 260 forment quatre paires d'ouvertures successives. Les deux ouvertures de chaque paire sont des ouvertures de passage pour les deux doigts d'une pince d'un tiroir. Les quatre paires d'ouvertures correspondent donc aux ouvertures nécessaires à la connexion du tiroir aux trois phases du réseau, plus au neutre.

Par ailleurs, un barreau d'extrémité 264 est disposé du côté droit lorsque l'on regarde le module de positionnement 20 par l'avant. Ce barreau d'extrémité 264 est un barreau de blocage, ou de verrouillage du déplacement de l'obturateur 26.

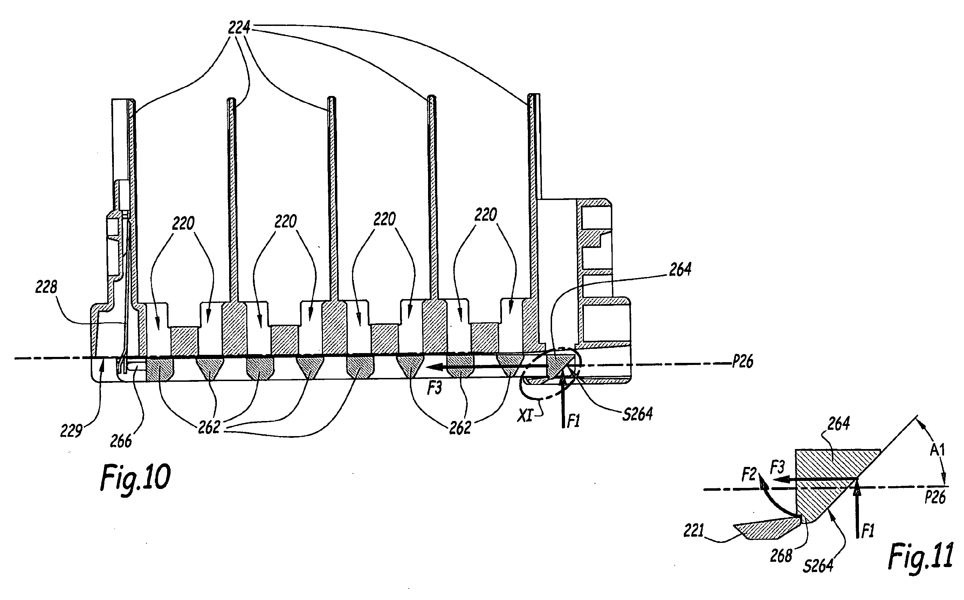

Le barreau de blocage 264 est fendu, c'est-à-dire qu'il comporte deux parties 264a et 264b, qui sont séparées par une fente 265, disposée environ au milieu du barreau 264 sur sa hauteur. Les parties 264a et 264b sont élastiquement déformables. En outre, comme mieux visible aux figures 10 et 11, le barreau d'extrémité 264 comporte une surface S264 de contact avec un organe de déverrouillage appartenant au tiroir, cet organe de déverrouillage étant adapté pour débloquer l'obturateur 26. En pratique, l'organe de déverrouillage de l'obturateur 26 est une fourche à deux doigts, qui est plus longue que les pinces de connexion aux barres B du jeu de barres vertical J2.

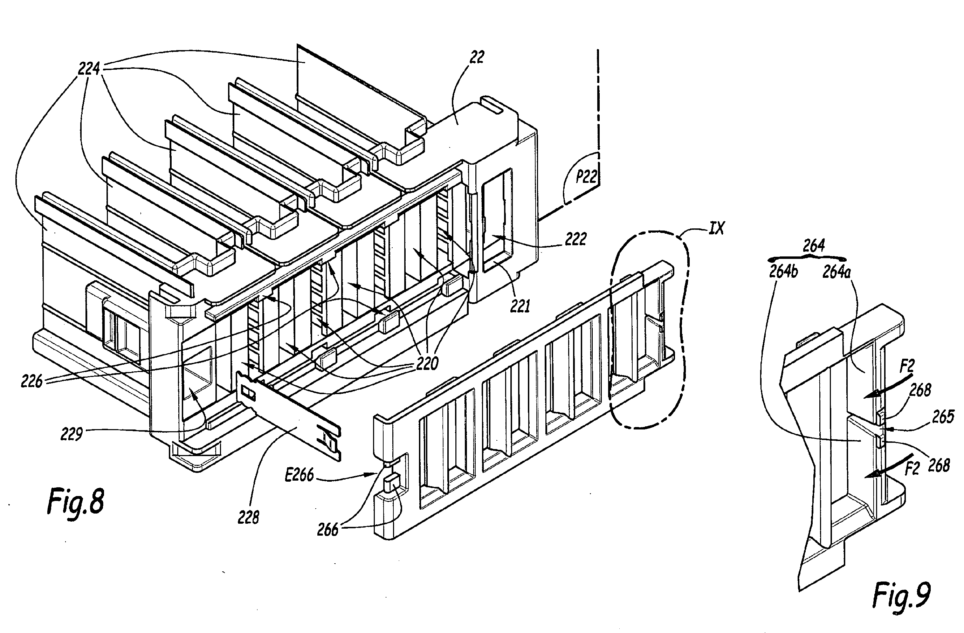

La surface S264 est formée par la face avant des parties 264a et 264b du barreau d'extrémité 264. C'est une surface verticale qui est inclinée par rapport au plan P26, d'un angle A1 environ égal à 45°. Les parties 264a et 264b du barreau 264 comportent chacune une languette 268 d'accrochage avec la partie avant 22 du module 20. Les languettes 268 sont disposées côte-à-côte, au plus proche de la fente 265, de part et d'autre de celle-ci en hauteur. Comme mieux visible à la figure 8, l'obturateur 26 comporte également deux pions 266, qui sont disposés à l'extrémité opposée au barreau de blocage 264. Ces pions 266 sont logés dans un évidement longitudinal E266 ménagé dans l'obturateur 26 et sont orientés face-à-face, selon une direction verticale, ceci permet le retrait du ressort.

La partie avant 22 comprend huit ouvertures 220 de passage des pinces du tiroir. Les ouvertures 220 sont disposées dans un même plan P22, qui est parallèle aux plans P2 et P26 et sont obturées par les barreaux 262 de l'obturateur 26 en configuration fermée, ce qui limite le risque d'une électrocution pour l'opérateur. Cela améliore l'isolation électrique du jeu de barres vertical J2 par rapport à l'extérieur. En outre, les ouvertures 220 sont ouvertes lorsque l'obturateur 26 est en configuration ouverte, c'est-à-dire qu'elles sont chacune alignées transversalement avec une ouverture 260 de l'obturateur 26.

La partie avant 22 comprend également une ouverture 222 de passage pour l'organe de déverrouillage de l'obturateur 26. L'ouverture 222 est disposée à une extrémité longitudinale de la partie avant 22, à droite lorsque l'on regarde la partie avant 22 par l'avant. L'ouverture 222 est délimitée par des parois 221 et assure également l'accrochage de l'obturateur 26 à la partie avant 22. En effet, comme visible à la figure 11, en configuration verrouillée de l'obturateur 26, les languettes 268 du barreau 264 sont accrochées à un bord 221 de l'ouverture 222, ce qui bloque le mouvement longitudinal de l'obturateur 26, par rapport à la partie avant 22, vers la gauche des figures 10 et 11.

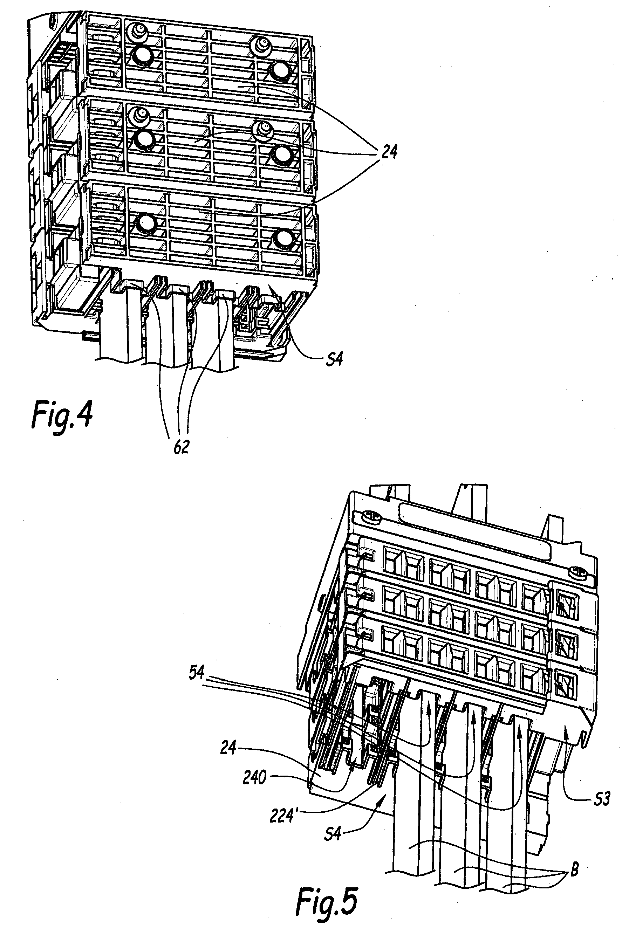

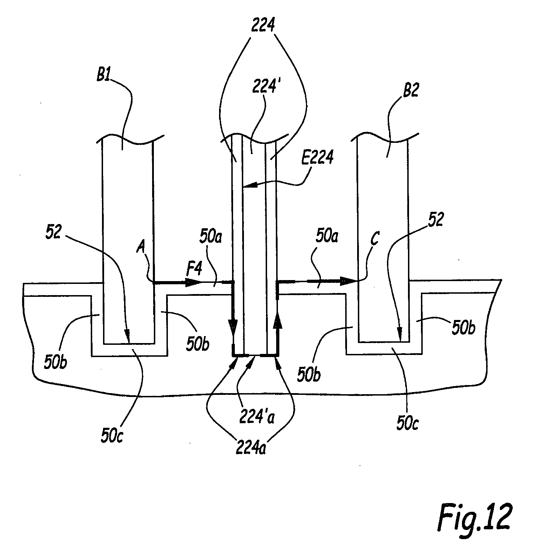

La partie avant 22 comporte des flancs 224 de séparation des barres du jeu de barres verticales J2 entre elles. Ces flancs 224 sont au nombre de cinq et s'étendent chacun vers l'arrière selon une direction transversale, c'est-à-dire perpendiculairement au plan P22. Ils sont disposés côte-à-côte en partie arrière de la partie 22. Les flancs 224 ne sont pas au contact des barres B. Les flancs 224 du module 20 délimitent sur leur bord supérieur une rainure E224 de réception d'un flanc 224' appartenant à un module identique disposé au dessus. Ces flancs 224' sont représentés aux figures 5 et 12. On note 224a et 224'a les surfaces respectives de la tranche, c'est-à-dire du bord avant des flancs 224 et 224'.

La partie avant 22 comprend aussi des glissières 226 de guidage en translation de l'obturateur 26, qui sont réparties longitudinalement au sein de la partie avant 22, sur un bord inférieur et sur un bord supérieur.

Par ailleurs, la partie avant 22 délimite une découpe 229 de passage d'un ressort plat 228. Ce ressort plat 228 est monté sur la partie 22, à une extrémité longitudinale opposée à l'ouverture 222. Le ressort plat 228 est une languette élastiquement déformable, qui est en permanence au contact des pions 266 et qui se déforme élastiquement lors du déplacement de l'obturateur 26. Le ressort plat 228 maintient, par défaut et de façon élastique, l'obturateur 26 en configuration fermée. Plus précisément, lors du déverrouillage, l'obturateur 26 se déplace longitudinalement à l'encontre de l'action de charge élastique du ressort plat 228.

Le ressort plat 228 permet de rappeler l'obturateur 26 en configuration fermée lorsque le tiroir est retiré, c'est-à-dire qu'il exerce un effort élastique de rappel de l'obturateur vers sa configuration fermée. Par ailleurs, le mouvement de l'obturateur 26 est en pratique bloqué par le ressort qui vient en butée sur la paroi latérale opposée à l'obturateur 229.

La partie avant 22 comporte, sur une face supérieure S1, des premières nervures 50. Ces nervures 50 s'étendent chacune longitudinalement entre deux flancs 224, sont électriquement isolantes et délimitent chacune un logement 52 de réception d'un côté d'une barre B du jeu de barres vertical J2. Les nervures 50 ne sont pas rectilignes, c'est-à-dire qu'elles présentent une forme en ligne brisée, ou en « chicane». En effet, les nervures 50 comprennent chacune une portion centrale 50c, qui forme le fond du logement 52, deux portions transversales 50b qui courent le long de la barre B de chaque côté de la portion centrale 50c et deux portions 50a, qui relient longitudinalement les portions 50b aux flancs 224. En configuration assemblée des barres B dans l'ensemble 6, les barres sont en contact avec les portions 50b et 50c des nervures 50.

Les premières nervures 50 et les flancs 224 de séparation des barres, font saillie vers le haut par rapport à la face supérieure S1, d'une hauteur d'environ 1 cm.

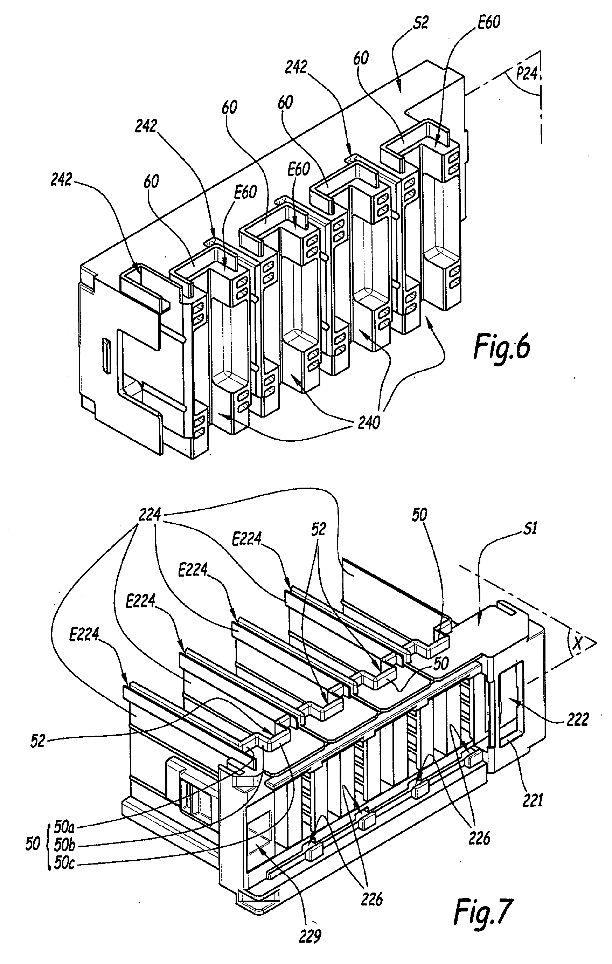

La partie arrière 24, plus particulièrement visible à la figure 6, permet principalement d'isoler les barres du jeu de barres vertical J2 par rapport au fond de l'enveloppe métallique 8. Elle délimite quatre logements 240 de réception des barres B du jeu de barres vertical J2. Un seul logement 240 est pointé aux figures 3 et 5 puisque les autres sont masqués par les barres B. Les logements 240, qui sont tous visibles à la figure 6, sont des évidements à section horizontale globalement rectangulaire, qui s'étendent verticalement et qui sont chacun adaptés pour coincer un côté d'une barre B, à savoir le côté opposé à celui engagé dans un logement 52 d'une nervure 50.

Les fonds des logements 240 sont contenus dans un plan vertical P24, qui est parallèle au plan P2. La partie 24 comporte également des encoches 242 de coincement des flancs 224 de la partie avant 22.

La partie arrière 24 comprend, sur une face supérieure S2, des deuxièmes nervures 60 adaptées pour isoler les barres du jeu de barres vertical J2 par rapport à la paroi arrière de l'enveloppe conductrice 8.
Ces nervures 60 sont en forme de U à fond plat, avec les deux branches du U qui sont parallèles et orientées vers la partie avant 22.

Enfin, la partie arrière 24 comprend une face inférieure S4 sur laquelle sont disposées des troisièmes nervures 62. Ces troisièmes nervures 62 sont des chicanes quiisolent les barres du jeu de barres vertical J2 entre elles, à l'interface avec un module identique disposé au dessous. Comme pour la partie avant 22, ces troisièmes nervures 62 ne sont pas rectilignes, c'est-à-dire qu'elles présentent une forme en ligne brisée. Par rapport aux nervures 50, les nervures 62 comprennent une portion rectiligne supplémentaire, qui s'étend vers l'arrière et qui définit avec le flanc 224' un espace de coincement du flanc 224 du module inférieur.

Comme visible aux figures 2, 4 et 5, les modules 20 sont adaptés pour être emboités les uns dans les autres. En effet, la partie avant 22 comporte une face supérieure S1 et une face inférieure S3 qui sont complémentaires l'une de l'autre. De même, la partie arrière 24 comporte une face supérieure S2 et une face inférieure S4 qui sont complémentaires l'une de l'autre. Ainsi, lors du montage d'un module 20 au dessus d'un autre, le module du dessus s'apparente à une pièce mâle alors que le module disposé en dessous est une pièce femelle.

De plus, la partie 22 de chaque module délimite, sur sa face inférieure S3, des espaces 54 de réception des premières nervures 50 portées par un module identique disposé au dessous. Ces espaces 54 sont prévus entre le module et les barres B du jeu de barres vertical J2 en configuration assemblée de l'ensemble 6.

De même, les troisièmes nervures 62 de la partie arrière 24 sont configurées pour être logées devant les nervures 60 portées par un module situé au dessus. Autrement dit, la partie arrière 24 de chaque module 20 délimite, au niveau de sa surface supérieure S2, des espaces E60 de réception des nervures 62 d'un module situé au dessus. Ces espaces E60 sont disposés entre les nervures 60 et les barres B du jeu de barres J2 en configuration assemblée de l'ensemble 6.

Les modules sont en appui l'un sur l'autre, si bien qu'il n'y a pas d'espace vide laissé à l'interface entre deux modules 20 adjacents en hauteur. Les modules de positionnement 20 sont donc disposés, en recouvrement partiel, les uns au dessus des autres, ce qui correspond à un effet « tuile », ou de recouvrement. Cela améliore l'isolation entre les conducteurs de l'ensemble 6.

Par ailleurs, l'immobilisation de la partie avant 22 par rapport à la partie arrière 24 est réalisé par l'intermédiaire de l'enveloppe 8, en engageant les ailettes des parties 22 et 24 respectivement dans les encoches 12 et 10 de l'enveloppe 8.

En fonctionnement, c'est-à-dire à l'état assemblé de l'ensemble de positionnement 6 et lorsque le tableau électrique 1 est en service, le courant circulant dans les barres B du jeu de barres J2 tend à s'écouler d'une barre à l'autre. Pour cela, le courant cherche à emprunter le chemin le plus court, ou le plus « facile ». Ici, les barres sont séparées entre elles par de l'air et par les flancs 224. Comme la matière plastique constitutive des modules 20 est un meilleur isolant que l'air le courant cherche à passer par la surface des modules 20, en « léchant » les parois, pour rejoindre les barres adjacentes. Il convient donc d'avoir une distance ou une capacité d'isolement suffisante, au niveau des parois, pour éviter la création d'un arc électrique. La distance d'isolement à partir de laquelle il n'y a pas de formation d'un arc électrique dépend de la tension d'alimentation du jeu de barres vertical J2. Au-delà de cette distance, l'amorçage de l'arc électrique ne peut pas se faire.

L'isolement entre les barres du jeu de barres J2 est notamment délicat à l'interface entre deux modules de positionnement successifs.

Plus précisément et comme visible à la figure 12, à l'interface entre deux modules, les nervures 50 du module inférieur et les flancs 224 des deux modules forment une barrière continue entre les barres au niveau de la partie avant 22. Ici, cette barrière est définie entre un point A de départ, situé sur une barre B1 et un point C d'arrivée, situé sur une barre adjacente B2. Les points A et C sont disposés dans un même plan horizontal à la jonction entre les portions 50b et 50c des nervures 50. Avec cet exemple, pour qu'un arc électrique se crée entre deux barres successives, le courant doit d'abord suivre la portion 50b d'une nervure 50 pour rejoindre un flanc 224 dans lequel est emboité le flanc 224' du module supérieur. Ensuite, le courant doit longer la surface du flanc 224 vers l'avant, jusqu'à atteindre la tranche du flanc 224, c'est-à-dire son bord vertical avant. Le courant doit par la suite cheminer le long des surfaces 224a et 224'a de la tranche des flancs 224 et 224' puis longer la paroi 224 vers l'arrière. Enfin, le courant doit rejoindre la barre B2 en empruntant la portion 50b de la nervure 50 disposée de l'autre côté des flancs 224 et 224'.

Au total, le courant doit parcourir une distance de 25,4 mm pour passer d'une barre à l'autre. Cette distance est une distance d'isolement des barres entre elles et le chemin à parcourir pour le courant afin de passer d'une barre à l'autre est un chemin de « rampage », ou de fuite. En pratique, plus ce chemin est long, plus le risque que le courant « rampe » d'une barre à l'autre est faible. La distance d'isolement entre les barres, qui est de 24,5 mm, est plus importante que l'écartement géométrique d2 entre deux barres successives. 25,4 mm correspond à la distance d'isolement de la norme UL Américaine. Ici, la distance d'isolement est suffisamment important pour éviter un court-circuit entre les barres. Ainsi, les nervures d'isolation 50 et les flancs 224 et 224' permettent d'augmenter la distance d'isolement entre les barres B sans pour autant changer l'écartement des barres. Les flancs 224 et 224' forment donc avec les nervures 50 des moyens d'augmentation de la distance d'isolement entre les barres de l'interface entre les deux modules successifs, en partie avant des modules 20. Cette distance d'isolement correspond à la longueur du chemin de rampage électrique entre les barres. Dans ce cas, c'est l'agencement des flancs 224 et 224' par rapport aux nervures 50 qui crée la distance d'isolement.A la figure 12, le chemin de rampage est représenté par des flèches F4, pour un courant cherchant à circuler entre les barres B1 et B2.

Le chemin de rampage est augmenté de manière analogue au niveau de la partie avant 22. Dans ce cas, pour qu'un arc électrique se crée en partie arrière et à l'interface entre deux modules successifs, il faut que le courant longe les nervures 62 et la tranche des flancs 224 et 224'. La distance d'isolement est la même que pour l'isolation à l'avant des modules 20. Les nervures 62 forment donc avec les flancs 224 et 224' des moyens d'augmentation de la distance d'isolement entre les barres à l'interface entre deux modules successifs, en partie arrière des modules 20. Dans ce cas, c'est la formé en ligne brisée des nervures 62 qui crée la distance d'isolement.

Par ailleurs, les nervures 60 permettent également d'augmenter la longueur du chemin de rampage électrique entre les barres B et l'enveloppe métallique 8, c'est-à-dire la distance d'isolement entre les barres B et l'enveloppe 8. En effet, si un arc éléctrique se crée, celui-ci doit contourner les nervures 60 pour atteindre l'enveloppe 8. La distance d'isolement est telle que l'amorçage de l'arc électrique ne s'effectue pas.

Par ailleurs, la surface supérieure du bouchon inférieur est complémentaire des surfaces inférieures S3 et S4 du module bas 20a et la surface inférieure du bouchon supérieur est complémentaire des surfaces S1 et S2 du module haut 20b, de manière à assurer une bonne isolation électrique entre les barres sur la totalité de la hauteur de l'ensemble 6.

Lorsqu'un tiroir est embroché sur le module 20, les deux doigts de la fourche du tiroir, c'est-à-dire de l'organe de déverrouillage, viennent d'abord en contact respectivement avec les deux parties 264a et 264b du barreau 264 puisque la fourche est plus longue que les pinces de connexion électrique. La fourche appuie alors sur la surface S264 des deux parties 264a et 264b du barreau 264 selon une direction transversale F1.

Cela entraine une légère flexion, voire une torsion F2 des parties 264a et 264b du barreau 264 et les languettes 268 se décrochent des parois 221 de l'ouverture 222.

De plus, comme le tiroir est embroché transversalement dans le tableau électrique 1, une fois que les languettes 268 sont décrochées des parois 221 de l'ouverture 222, l'obturateur 26 est déverrouillé et est entrainé en déplacement dans les glissières 226 selon une direction longitudinale. En effet, le barreau 264 agit comme un coin grâce à sa surface inclinée S264 et transforme l'effort transversal F1 appliqué par le tiroir sur la surface S264 du barreau 264, en un déplacement longitudinal F3 de l'obturateur 26. Le déplacement F3 de l'obturateur 26 implique que les barreaux 262 de l'obturateur 26 découvrent les ouvertures 220 de la partie avant 22. Dès lors, les ouvertures 220 et 260 sont alignées transversalement et les pinces du tiroir peuvent venir se connecter aux barres du jeu de barres vertical J2.

Par ailleurs, l'obturateur 26 ne peut être déverrouillé de la partie avant 22 que par embrochement d'un tiroir ou en utilisant un outil spécifique. Ainsi, l'ouverture des fentes 220 de passage des pinces ne peut pas être effectuée manuellement par l'opérateur, ce qui, d'un point de vue normatif, correspond à un niveau de sécurité plus élevé que pour un obturateur détachable manuellement.

Les modules de positionnement 20 de l'ensemble de positionnement 6 sont assemblés de la manière suivante.

L'enveloppe métallique 8 est posée à plat, avec les deux parois latérales de l'enveloppe dirigées verticalement et la surface extérieure du fond de l'enveloppe 8 en appui sur une surface plane. La partie arrière 24 du module 20a est fixée à l'intérieur de l'enveloppe 8. Cette partie arrière 24 est disposée au fond de l'enveloppe, à l'extrémité 8a de celle-ci. Les parties arrières 24 des autres modules 20 sont ensuite assemblées horizontalement l'une après l'autre, en allant de la première extrémité 8a vers la deuxième extrémité 8b de l'enveloppe 8.

Une deuxième étape consiste à positionner horizontalement les barres du jeu de barres vertical J2 dans les logements 240 des parties arrières 24 des modules 20.

Une troisième étape consiste à fixer les parties avants 22, chacune équipées d'un obturateur 26. De manière analogue au montage des parties arrières 24, le montage des parties avants 22 s'effectue horizontalement en allant de la première extrémité 8a à la deuxième extrémité 8b de l'enveloppe 8. Ainsi, le monteur commence par fixer la partie avant 22 du module 20a et assemble les autres parties avants 22 l'une après l'autre en allant vers la deuxième extrémité 8b de l'enveloppe 8.

Les barres B du jeu de barres vertical J2 sont alors coincées entre les parties avants 22 et arrières 24 des modules 20

Lorsque tous les modules 20 sont assemblés, les bouchons supérieur et inférieur sont respectivement assemblés avec les modules 20b et 20a, de sorte qu'une fois que l'ensemble 6 est redressé, les bouchons inférieur et supérieur se retrouvent respectivement en dessous et au dessus des modules 20a et 20b. Les ceintures de rigidification 16 sont enfin attachées en partie haute et basse de l'ensemble 6 pour assurer une bonne tenue mécanique de celui-ci. L'ensemble 6 est alors prêt à l'emploi, c'est-à-dire qu'il peut être redressé et implanté dans le tableau électrique 1. Le fait d'assembler l'ensemble de positionnement 6 à plat facilite considérablement le montage.

La profondeur des modules 20, c'est-à-dire leur dimension transversale, peut être ajustée sur une plage de 10 mm pour s'adapter à différentes valeurs d'élancement des barres. L'élancement des barres correspond à leur dimension transversale et l'ajustement de la profondeur des modules 20 s'effectue en approchant ou en éloignant la partie avant 22 de la partie arrière 24. Cet ajustement entraine seulement le déplacement de l'enveloppe 8.

Les caractéristiques techniques des modes de réalisation et variantes envisagés ci-dessus peuvent être combinées entre elles pour donner de nouveaux modes de réalisation de l'invention.

## Revendications

1. Ensemble (6) de positionnement de tiroirs (T2) pour un tableau électrique (1) comprenant :
- un jeu de barres vertical (J2) de distribution du courant électrique à des appareils électriques, ce jeu de barres comprenant plusieurs barres, qui sont disposées dans un même plan vertical (P2) et sur lesquelles il est prévu de connecter des tiroirs (T2) du tableau électrique, et
- plusieurs modules (20) de positionnement des tiroirs, qui sont disposés les uns au-dessus des autres, qui entourent les barres du jeu de barres vertical et qui comprennent des moyens (50, 62, 224, 224') d'augmentation de la distance d'isolement entre les barres à l'interface entre deux modules successifs, cette distance d'isolement correspondant à la longueur du chemin de rampage électrique entre les barres,
**caractérisé en ce que** les moyens d'augmentation comprennent des flancs (224, 224') de séparation des barres du jeu de barres vertical (J2), entre lesquels s'étendent des nervures d'isolation (50 , 62), certaines (50) au moins des nervures (50, 62) délimitant un logement (52) de réception d'un côté d'une barre (B) du jeu de barres vertical (J2) et **en ce que** les nervures d'isolation (50, 62) ne sont pas rectilignes.

2. Ensemble de positionnement selon la revendication 1, **caractérisé en ce que** les nervures d'isolation (50, 62) ont une forme en ligne brisée.

3. Ensemble selon l'une des revendications précédentes, **caractérisé en ce que** la distance d'isolement est égale à 25,4 mm.

4. Ensemble de positionnement selon l'une des revendications précédentes, **caractérisé en ce que** chaque module de positionnement (20) comporte :
- une première partie (22), dans laquelle sont ménagées des ouvertures (220) de passage pour des moyens de connexion électrique d'un tiroir aux barres (B) du jeu de barres vertical (J2),
- une deuxième partie (24), disposée à l'arrière de la première partie,
- un obturateur (26), qui est mobile par rapport à la première partie entre une configuration fermée dans laquelle les ouvertures sont obturées et une configuration ouverte dans laquelle les ouvertures sont découvertes.

5. Ensemble de positionnement selon la revendication 4, **caractérisé en ce que** l'obturateur (26) est une grille, qui est mobile horizontalement (F3), par rapport à la première partie (22), selon une direction parallèle au plan vertical (P2) de positionnement des barres (B) du jeu de barres vertical (J2) et qui est positionnée en premier plan du module et **en ce que** la grille (26) comporte plusieurs ouvertures (260) et plusieurs barreaux (262, 264), parmi lesquels un barreau d'extrémité (264) est adapté pour être accroché à la première partie (22) lorsque l'obturateur est en configuration fermée.

6. Ensemble de positionnement selon la revendication 5, **caractérisé en ce que** le barreau d'extrémité (264) est décrochable de la première partie (22) par application d'un effort transversal (F1) dirigé globalement perpendiculairement au plan vertical (P2) dans lequel sont placées les barres du jeu de barres vertical (J2), **en ce que** le barreau d'extrémité (264) comporte une surface de contact (S264) inclinée (A1) par rapport à ce plan, et **en ce que** l'effort appliqué pour décrocher le barreau entraine aussi un déplacement longitudinal (F3) de la grille par rapport à la première partie (22).

7. Ensemble selon l'une des revendications 4 à 6, **caractérisé en ce que** chaque module (20) comprend un moyen (228) de rappel de l'obturateur (26) en configuration fermée.

8. Ensemble selon la revendication 7, **caractérisé en ce que** le moyen de rappel comprend un ressort plat (228) attaché à la première partie (22), qui exerce un effort de charge élastique de rappel de l'obturateur (26) vers sa configuration fermée.

9. Tableau électrique (1), comprenant une armoire, dans laquelle est disposé un jeu de barres horizontal d'alimentation (J1) prévu pour être connecté à un jeu de barres vertical de distribution (J2), ce tableau étant **caractérisé en ce qu'**il comprend un ensemble de positionnement (6) de tiroirs selon l'une des revendications précédentes.

10. Procédé de montage d'un ensemble (6) de positionnement de tiroirs selon l'une des revendications 4 à 8, **caractérisé en ce qu'**il comprend des étapes successives consistant à :
a) poser à plat une enveloppe métallique (8) à section transversale en U, avec les deux parois latérales de l'enveloppe dirigées verticalement et la surface extérieure du fond de l'enveloppe en contact avec une surface plane,
b) fixer la deuxième partie d'un premier module (20a) à l'intérieur de l'enveloppe, au niveau d'une première extrémité (8a) de l'enveloppe,
c) assembler les deuxièmes parties (24) des autres modules (20) l'une après l'autre en allant de la première extrémité (8a) à une deuxième extrémité (8b), la première et la deuxième extrémité étant respectivement des extrémités basse et haute de l'enveloppe en configuration assemblée de l'ensemble (6) dans le tableau électrique,
d) positionner des barres (B) du jeu de barres vertical dans des logements (240) des deuxièmes parties (24) des modules,
e) fixer la première partie du premier module (20a) au dessus des barres (B), et
f) assembler la première partie (22) des autres modules l'une après l'autre en allant de la première extrémité à la deuxième extrémité.

## Patentansprüche

1. Anordnung (6) zum Positionieren von Einschüben (T2) für eine elektrische Schaltanlage (1), umfassend:
- einen Satz (J2) von vertikalen Stangen zur Verteilung eines elektrischen Stroms auf elektrische Geräte, wobei dieser Stangensatz mehrere Stangen umfasst, die in einer selben vertikalen Ebene (P2) angeordnet sind und über die eine Verbindung von Einschüben (T2) der Schaltanlage vorgesehen ist, und
- mehrere Module (20) zur Positionierung der Einschübe, die übereinander angeordnet sind, die die Stangen des Satzes von vertikalen Stangen umgeben und die Mittel (50, 62, 224, 224') zur Vergrößerung des Abstands der Isolierung zwischen den Stangen an der Schnittstelle zwischen zwei aufeinanderfolgenden Modulen umfassen, wobei dieser Isolierungsabstand der Länge des elektrischen Kriechwegs zwischen den Stangen entspricht,
**dadurch gekennzeichnet, dass** die Mittel zur Vergrößerung Flanken (224, 224') zur Trennung der Stangen des Satzes (J2) von vertikalen Stangen umfassen, zwischen denen sich Isolierstege (50, 62) erstrecken, wobei mindestens einige (50) der Stege (50, 62) einen Raum (52) zur Aufnahme einer Seite einer Stange (B) des Satzes (J2) von vertikalen Stangen begrenzt und dass die Isolierstege (50, 62) nicht geradlinig sind.

2. Anordnung zum Positionieren nach Anspruch 1, **dadurch gekennzeichnet, dass** die Isolierstege (50, 62) eine Form einer gebrochenen Linie haben.

3. Anordnung nach einem der vorhergehenden Ansprüche, **dadurch gekennzeichnet, dass** der Isolierungsabstand gleich 25,4 mm ist.

4. Anordnung zur Positionierung nach einem der vorhergehenden Ansprüche, **dadurch gekennzeichnet, dass** jedes Modul (20) zur Positionierung umfasst:
- ein erstes Teil (22), in dem Öffnungen (220) für den Durchgang von Mitteln zur elektrischen Verbindung eines Einschubs mit den Stangen (B) des Satzes (J2) von vertikalen Stangen angeordnet sind,
- ein zweites Teil (24), das hinter dem ersten Teil angeordnet ist,
- ein Verschlusselement (26), das in Bezug auf das erste Teil zwischen einer geschlossenen Stellung, in der die Öffnungen verschlossen sind, und einer offenen Stellung, in der die Öffnungen nicht bedeckt sind, beweglich ist.

5. Anordnung zur Positionierung nach Anspruch 4, **dadurch gekennzeichnet, dass** das Verschlusselement (26) ein Gitter ist, das in Bezug auf das erste Teil (22) gemäß einer Richtung parallel zur vertikalen Ebene (P2) der Positionierung der Stangen (B) des Satzes (J2) von vertikalen Stangen horizontal beweglich ist und das auf der Vorderseite des Moduls positioniert ist, und dass das Gitter (26) mehrere Öffnungen (260) und mehrere Stäbe (262, 264) aufweist, von denen ein Stab (264) am Ende angepasst ist, an dem ersten Teil (22) befestigt zu werden, wenn das Verschlusselement in der geschlossen Stellung ist.

6. Anordnung zur Positionierung nach Anspruch 5, **dadurch gekennzeichnet, dass** der Stab (264) am Ende von dem ersten Teil (22) durch Aufbringen einer Querkraft (F1), die im Wesentlichen senkrecht zur vertikalen Ebene (P2) gerichtet ist, in der die Stangen des Satzes (J2) von vertikalen Stangen angeordnet sind, abnehmbar ist, dass der Stab (264) am Ende eine in Bezug auf diese Ebene geneigte (A1) Kontaktfläche (S264) aufweist und dass die zum Abnehmen des Stabs aufgebrachte Kraft auch eine Längsverschiebung (F3) des Gitters in Bezug auf das erste Teil (22) mit sich bringt.

7. Anordnung nach einem der Ansprüche 4 bis 6, **dadurch gekennzeichnet, dass** jedes Modul (20) ein Mittel (228) zum Rückstellen des Verschlusselements (26) in die geschlossene Stellung umfasst.

8. Anordnung nach Anspruch 7, **dadurch gekennzeichnet, dass** das Mittel zum Rückstellen eine flache, an dem ersten Teil (22) befestigte Feder (228) umfasst, die eine elastische Vorspannkraft zur Rückstellung des Verschlusselements (26) in seine geschlossene Stellung ausübt.

9. Schaltanlage (1), umfassend einen Schrank, in dem ein Satz (J1) von horizontalen Versorgungsstangen angeordnet ist, der vorgesehen ist, mit einem Satz (J2) von vertikalen Verteilerstangen verbunden zu werden, wobei diese Schaltanlage **dadurch gekennzeichnet ist, dass** sie eine Anordnung (6) zur Positionierung von Einschüben nach einem der vorhergehenden Ansprüche umfasst.

10. Verfahren zum Montieren einer Anordnung (6) zur Positionierung von Einschüben nach einem der Ansprüche 4 bis 8, **dadurch gekennzeichnet, dass** es die aufeinanderfolgenden Schritte umfasst, die darin bestehen:
a) eine metallische Hülle (8) mit U-förmigem Querschnitt mit zwei vertikal ausgerichteten Seitenwänden der Hülle und der Außenfläche des Bodens der Hülle in Kontakt mit einer ebenen Fläche flach hinzulegen,
b) das zweite Teil eines ersten Moduls (20a) im Inneren der Hülle an einem ersten Ende (8a) der Hülle festzulegen,
c) die zweiten Teile (24) der anderen Module (20) eines nach dem anderen zusammenzufügen, indem vom ersten Ende (8a) zu einem zweiten Ende (8b) gegangen wird, wobei das erste und das zweite Ende jeweils das untere und obere Ende der Hülle in der zusammengesetzten Konfiguration der Anordnung (6) in der Schaltanlage sind,
d) Stäbe (B) des Satzes an vertikalen Stangen in Aufnahmeräume (240) der zwei Teile (24) der Module zu positionieren,
e) das erste Teil des ersten Moduls (20a) über die Stangen (B) festzulegen, und
f) das erste Teil (22) der anderen Module, eines nach dem anderen, zusammenzusetzen, indem von dem ersten Ende zu dem zweiten Ende gegangen wird.

## Claims

1. A rack (T2) positioning assembly (6) for an electric panel (1), comprising:
- a vertical busbar (J2) for distributing electric current to electric appliances, said busbar comprising several bars, which are positioned in a same vertical plane (P2) and on which it is provided to connect racks (T2) of the electric panel, and
- several rack positioning modules (20), which are positioned above one another, which surround the bars of the vertical busbar and which comprise means (50, 62, 224, 224') for increasing the insulation distance between the bars at the interface between two successive modules, that insulation distance corresponding to the length of the electric creep path between the bars,
**characterized in that** the increasing means comprise separating flanks (224, 224') for the bars of the vertical busbar (J2), between which insulating ribs (50, 62) extend, at least (50) some of the ribs (50, 62) delimiting a housing (52) for receiving a side of a bar (B) of the vertical busbar (J2) and **in that** the insulating ribs (50, 62) are not straight.

2. The positioning assembly according to claim 1, **characterized in that** the insulating ribs (50, 62) are in the form of a broken line.

3. The assembly according to one of the preceding claims, **characterized in that** the insulation distance is equal to 25.4 mm.

4. The positioning assembly according to one of the preceding claims, **characterized in that** each positioning module (20) comprises:
- a first part (22), in which passage openings (220) are arranged for electric connection means connecting a rack to the bars (B) of the vertical busbar (J2),
- a second part (24), positioned behind the first part,
- a closing member (26), which is movable relative to the first part between a closed configuration in which the openings are closed off and an open configuration in which the openings are exposed.

5. The positioning system according to claim 4, **characterized in that** the closing member (26) is a grate, which is horizontally movable (F3) relative to the first part (22), in a direction parallel to the vertical positioning plane (P2) of the bars (B) of the vertical busbar (J2) and which is positioned in the foreground of the module, and **in that** the grate (26) comprises several openings (260) and several bars (262, 264), among which an end part (264) is suitable for being attached to the first part (22) when the closing member is in the closed configuration

6. The positioning assembly according to claim 5, **characterized in that** the end bar (264) is detachable from the first part (22) by applying a transverse force (F1) oriented globally perpendicular to the vertical plane (P2) in which the bars of the vertical busbar (J2) are placed, **in that** the end bar (264) comprises a contact surface (S264) that is inclined (A1) relative to that plane, and **in that** the force applied to detach the bar also causes a longitudinal movement (F3) of the grate relative to the first part (22).

7. The assembly according to one of claims 4 to 6, **characterized in that** each module (20) comprises a means (228) for returning the closing member (26) to the closed configuration

8. The assembly according to claim 7, **characterized in that** the return means comprises a flat spring (228) attached to the first part (22), which exerts an elastic load force returning the closing member (26) to its closed configuration.

9. An electric panel (1), comprising a cabinet, in which a horizontal power supply busbar (J1) is positioned provided to be connected to a vertical distributor busbar (J2), said panel being **characterized in that** it comprises a rack positioning assembly (6) according to one of the preceding claims

10. A method for assembling a rack positioning assembly (6) according to one of claims 4 to 8, **characterized in that** it comprises the following successive steps:
a) placing a metal enclosure (8) with a U-shaped cross-section flat, with the two side walls of the enclosure oriented vertically and the outer surface of the bottom of the enclosure in contact with a planar surface,
b) fastening the second part of a first module (20a) to the inside of the enclosure, at a first end (8a) of the enclosure,
c) assembling the second parts (24) of the other modules (20) one after the other going from the first end (8a) to a second end (8b), the first and second ends respectively being lower and upper ends of the enclosure in the assembled configuration of the assembly (6) in the electric panel,
d) positioning bars (B) of the vertical busbar in housings (240) of the second parts (24) of the modules,
e) fastening the first part of the first module (20a) to the top of the bars (B), and
f) assembling the first part (22) of the other modules one after the other going from the first end to the second end.
